# EUROPEAN PATENT SPECIFICATION

(11) **EP 3 551 450 B1**
(45) Date of publication and mention of the grant of the patent: **10.11.2021**
(21) Application number: 16923426.7
(22) Date of filing: 09.12.2016
(51) Int. Cl.: B32B 17/06, B32B 27/06, B32B 33/00, B65D 81/00, B32B 17/10

(54) **PACKAGING FILMS WITH ALTERNATING INDIVIDUAL LAYERS OF GLASS AND PLASTIC**
VERPACKUNGSFOLIEN MIT ALTERNIERENDEN EINZELNEN SCHICHTEN AUS GLAS UND KUNSTSTOFF
FILMS D'EMBALLAGE À COUCHES INDIVIDUELLES ALTERNÉES DE VERRE ET DE PLASTIQUE

(43) Date of publication of application: 16.10.2019
(73) Proprietor: Bemis Company, Inc., Neenah, WI 54956 (US)
(72) Inventor: MICHAUD, Ryan A., Winneconne, WI 54986 (US); VENNERBERG, Daniel C., Neenah, WI 54956 (US)
(74) Representative: Vossius & Partner Patentanwälte Rechtsanwälte mbB
(86) International application number: PCT/US2016/065953
(87) International publication number: WO 2018/106263

(56) References cited:
- US-A- 4 314 031
- US-A- 5 681 666
- US-A1- 2004 195 960
- US-A1- 2007 110 932
- US-A1- 2009 121 333
- US-A1- 2009 278 277
- US-A1- 2010 279 107
- US-B1- 6 815 070

## Description

### BACKGROUND OF THE INVENTION

The present invention relates to multilayered packaging films comprising a coextruded film having alternating individual layers of glass and plastic to produce high oxygen, moisture and/or chemical barrier materials. These films are useful for packaging oxygen and/or moisture sensitive foods and non-food products, such as pharmaceutical products and medical devices,

The following description of the background and embodiments of the invention thereafter is provided to aid in understanding the invention, but is not admitted to describe or constitute prior art to the invention.

There is great interest in the development of high barrier materials which prevent the ingress of various gases, moisture and/or chemicals which may be used for flexible food and pharmaceutical packaging and consumer or industrial electronics. High oxygen barrier packaging materials are needed for these applications. The traditional oxygen barrier material for flexible packaging has been the use of aluminum in the form of sheets a few micrometers thick. Aluminum foil provides gas and oxygen barrier in flexible packages when it is used at thickness greater than 25.4 microns. However, when used in smaller thicknesses it is susceptible to the formation of pinholes and other stress induced fractures such as flex crack. Incorporation of foil into multilayer structures requires multiple lamination steps; this is expensive compared to coextrusion which reduces the process to a single step.

Another well-known method of improving the barrier properties of packaging materials is to incorporate ethylene vinyl alcohol copolymer (EVOH) into a multilayer film structure. An oxygen permeability for a 27 mol% ethylene EVOH of about 0.006 cm³·mil/100 inch²/24 hours at 23 C and 0% relative humidity has been reported. However, the most significant issue concerning the use of EVOH as an oxygen barrier material is its moisture sensitivity. EVOH is hydrophilic, absorbing a significant amount of moisture when directly exposed to humid conditions, leading to an increase in it oxygen permeability. The dependence of EVOH on humidity in estimating its gas barrier properties is discussed in the article "Ethylene Vinyl Alcohol Resins for Gas-Barrier Material" by T. Iwanami and Y. Hirai. This article discusses the degradation in oxygen barrier properties of the EVOH as humidity increases.

Another approach to improving the oxygen barrier properties of packaging films is to incorporate solid inorganic fillers into a thermoplastic polymer matrix. This method includes blending both components using conventional polymer processing methods to encapsulate the inorganic filler into thermoplastic polymer and extruding the blend into sheets or films. However, when some inorganic fillers such as calcium carbonate, talc, glass, and clays are incorporated into the polymer matrix, it can lead to intractable viscosity of the polymer-filler hybrid, especially at filler levels greater than thirty volume percent, making it very difficult to melt process them into useful products.

### SUMMARY OF THE INVENTION

Provided are multilayered packaging films comprising a coextruded film having alternating individual layers of glass and plastic which exhibit superior barrier properties and flexibility. The coextruded films having alternating individual layers of glass and plastic may be the multilayered packaging film itself or may be a sub-unit of a larger packaging film structure. These coextruded films having alternating layers of glass and plastic were made by a continuous simultaneous extrusion of glass and plastic to form a combined multilayer flow stream of at least one individual layer of glass and at least one individual layer of plastic. In some embodiments, the coextruded film includes at least two of glass and at least one of plastic. In other embodiments, the coextruded film includes at least ten layers of glass and at least ten layers of plastic. The coextrusion of glass and plastic was performed in combination with layer multiplication feed-block. The coextruded films having alternating individual layers of glass and plastic may have any number of layers of glass and any number of layers of plastic as desired depending upon the requirements of a particular packaging application. The total number of alternating individual layers of glass and plastic may vary from three to three thousand or more.

In some embodiments, the coextruded films having alternating individual layers of glass and plastic may be combined with discrete outer layer of a heat sealing material. Heat sealing layers may include, but are not limited to polyolefins such as polyethylenes, ethylene alpha-olefin copolymers, polypropylene copolymers, ethylene vinyl acetate copolymers, ionomers, and blends thereof. In other embodiments, the coextruded films having alternating layers of glass and plastic may be combined with a discrete outer layer of an abuse material. Abuse layers may include, but are not limited to polyamides, oriented polyamides, and aromatic polyesters such as polyethylene terephthalates, oriented polyethylene terephthalates, polypropylenes and oriented polypropylenes. In other embodiments, the coextruded films having alternating individual layers of glass and plastic may be combined with both a heat sealing layer and an abuse layer. In some embodiments, the coextruded films having alternating individual layers of glass and plastic may include two outer layers of the same material. For example, two discrete outer layers of a heat sealing material may be extrusion coated onto the coextruded film having alternating individual layers of glass and plastic.

Provided herein are multilayered packaging films comprising a coextruded film having alternating individual layers of glass and plastic having superior gas and water barrier characteristics compared to conventional packaging materials. In some embodiments, the multilayered packaging films have an oxygen transmission rate within a range from 0 to 1 cm³/m²/24 hour at 23 °C and 0% relative humidity. In some embodiments, the multilayered packaging films have a water vapor transmission rate within a range from 0 to 1 g/m²/24 hour at 38 °C and 90% relative humidity. In such embodiments, the multilayered packaging films have a water vapor transmission rate within a range from 0 to 0.08 g/m²/24 hour at 38 °C and 90% relative humidity, In other embodiments, the multilayered packaging films may have excellent chemical barrier properties. Permeation of oxygen and water vapor was determined by a method by means of Mocon® permeation-measurement equipment. Oxygen permeation was determined here at 23 °C and 0% relative humidity, and water vapor permeation at 38 °C and 90% relative humidity. Those skilled in the art will recognize that films having an oxygen transmission rate within a range from 0 to 1 cm³/m²/24 hour and/or a water vapor transmission rate within a range from 0 to 1 g/m²/24 hour are indicative of defect-free high barrier materials. The present invention defines a multilayer packaging film comprising: a co-extruded film comprising alternating layers of glass and plastic, wherein the number of glass layers is at least two and the number of plastic layers is at least one, wherein the multilayer packaging film has a total thickness within a range from 10 micron to 250 micron.

Also provided herein are multilayer packaging film comprising a coextruded film having alternating individual layers of glass and plastic with a high degree of flexibility. Flexibility is determined by a minimum bending radius. A "minimum bend radius" used herein refers to the smallest allowed radius the film is allowed to be bent without breaking, cracking or causing any sort of defect that would affect the film's barrier properties. Those skilled in the art will recognize that the smaller the minimum bend radius, the greater is the material flexibility (as the radius of curvature decreases, the curvature increases). In some embodiments, the multilayer packaging films comprising alternating layers of glass and plastic have a minimum bend radius of less than 10 mm. As such, the multilayer packaging film comprising a coextruded film having alternating individual layers of glass and plastic provide a significantly useful degree of flexibility.

The glass of the coextruded films having alternating layers of glass and plastic has a glass transition temperature of less than 500 C, for example, less than 500, 400, 350, 300, 250 or 200 °C. In some embodiments, the glass can have a glass transition temperature, T_{g} of less than 400 °C, for example, less than 400, 350, 300, 250, 200 or 150 °C. In some embodiments, the glass is a tin fluorophosphate glass (sometimes referred to as "SnF-glass"). Such glasses can be made by batch sintering of inorganic materials such as, but not limited to, BaF₂, SnF₂, ZnF₂, P₂O₅, Sn(PO₄)₂, SnO, Sn₂P₂O₇, SnCl₂, NH₄H₂PO₄, NH₄PF₆, Sn₂P₂O₇ and can be melted at temperatures not exceeding 600 °C (typically in the range within 400 °C and 500 °C) to provide homogenous glasses of good quality and relatively high chemical durability.

The multilayer packaging films comprising a coextruded film having alternating individual layers of glass and plastic have a glass composition comprising on an elemental basis tin in a mole percentage within a range from 12.0 to 17.1, fluorine in a mole percentage within a range from 11.2 to 24.3, phosphorus in a mole percentage within a range from 12.1 to 19.6, and oxygen in a mole percentage within a range from 43.3 to 61.1. In some embodiments, the glass comprises on an elemental basis tin in a mole percentage within a range from 15.4 to 17.1, fluorine in a mole percentage within a range from 19.6 to 24.3, phosphorus in a mole percentage within a range from 14.2 to 16.6, and oxygen in a mole percentage within a range from 43.3 to 56, The qualitative and quantitative determination of the elemental components of the glass compositions of the multilayer packaging films can be determined by energy dispersive x-ray (EDX) spectrometric analysis. EDX spectrometric analysis techniques of inorganic compositions are well-known and can be readily be performed by those skilled in the art without undue experimentation.

Any plastic may be used for the alternating individual glass and plastic layers. In some embodiments, the plastic may be defined as a "thermoplastic." A thermoplastic is referred herein as any polymer or polymer mixture that softens when exposed to heat and returns to its original condition when cooled to room temperature. In some embodiments, the plastic may include crystalline or semicrystalline thermoplastics, amorphous thermoplastics and blends thereof including, but not limited to aliphatic and aromatic polyamides, polyethers, polyimides, ionomers, aliphatic and aromatic polyesters such as polyethylene terephthalates, glycol modified polyethylene terephthalates, polyethylene isophthalates, and polyethylene naphthalates; cyclic olefin copolymers, polyolefin homopolymers and copolymers such as polyethylenes, high density polyethylenes, maleic anhydride-modified polyethylenes, ethylene vinyl alcohol copolymers, ethylene vinyl acetate copolymers, ethylene acrylic acid, ethylene methacrylic acid, ethylene alkyl acrylates, and polypropylenes, polyamideimides, polycarbonates, polyetheretherketones, polyetherimides, polyethersulphones, polymethyl methacrylates, polyoxymethylenes, polyphenylene sulphides, polystyrenes including high impact polystyrenes, unplasticized polyvinyl chlorides, thermoplastic polyurethanes and blends thereof.

Exemplary of aromatic polyamides include, but are not limited to, nylon 4,1, nylon 6,1, nylon 6,6/6I copolymer, nylon 6,6/6T copolymer, nylon MXD6 (poly-m-xylylene adipamide), poly-p-xylylene adipamide, nylon 6I/6T copolymer, nylon 6T/6I copolymer, nylon MXDI, nylon 6/MXDT/I copolymer, nylon 6T (polyhexamethylene terephthalamide), nylon 12T (polydodecamethylene terephthalamide), nylon 66T, nylon 6-3-T (poly(trimethyl hexamethylene terephthalamide).

Exemplary of commercially available cyclic olefin copolymers include, but are not limited to, the TOPAS® family of resins which is supplied by Polyplastics (Celanese-Ticona), Tokyo, Japan.

In some embodiments, the plastic includes aromatic or alkyl substituted aromatic polyesters, *i.e.,* various isomers of phthalic acid, such as paraphthalic acid (or terephthalic acid), isophthalic acid and naphthalic acid. Specific examples of alkyl substituted aromatic acids include the various isomers of dimethylphthalic acid, such as dimethylisophthalic acid, dimethylorthophthalic acid, dimethylterephthalic acid, the various isomers of diethylphthalic acid, such as diethylisophthalic acid, diethylorthophthalic acid, the various isomers of dimethylnaphthalic acid, such as 2,6-dimethylnaphthalic acid and 2,5-dimethylnaphthalic acid, and the various isomers of diethylnaphthalic acid. In some embodiments, the aromatic polyesters include polyethylene terephthalate copolymer, glycol-modified polyethylene terephthalate copolymers and mixtures thereof. Further examples of glycol-modified polyethylene terephthalate copolymers include, but are not limited to, those sold under the trademarks SKYGREEN® PETG by SK Chemicals America (Irvine, CA, USA) and Eastar™ Copolyester 6763 by Eastman Chemical Company, Inc. (Kingsport, TN, USA).

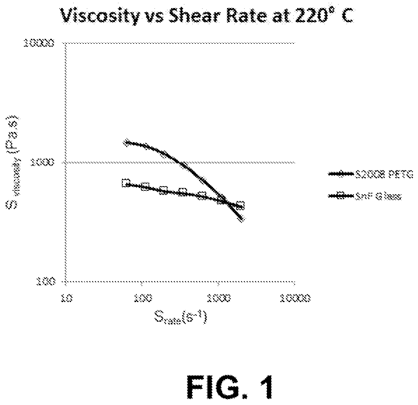

In some embodiments, the glass and plastic used in the coextruded films of alternating individual layers both exhibit similar viscosity-shear rate curves. For example, based upon similar viscosity-shear rate curves as illustrated in the graph shown in FIG. 1, a glass such as a tin fluorophosphate glass, "SnF Glass" having a molar composition of 20% SnO + 50% SnF₂ + 30% P₂O₅ and a plastic of a glycol-modified polyethylene terephthalate copolymer, SKYGREEN® PETG SK2008 having a specific gravity of 1.27 g/cm³, a glass transition temperature, T_{g} of 80° C, a Vicat softening temperature of 85 °C, can be readily co-extruded. In some embodiments, the glass and plastic have a viscosity ratio of in the range of 1:15 and 15:1 at temperatures within the range of 110 °C and 260 °C at shear rates of between 1 to 1000 s⁻¹.

In some other embodiments, the glass and plastic used in the coextruded films of alternating individual layers may both exhibit dissimilar viscosity-shear rate curves.

The coextruded films having alternating individual layers of glass and plastic were manufactured by a continuous extrusion process which includes the steps of introducing the plastic or blend into a first extruder, introducing the glass to a second extruder, heating the materials to a desired temperature in the extruders and bringing one or more melt streams of each material together to produce a combined multilayered flow stream of at least one individual layer of glass and at least one individual layer of plastic. The combined multilayered flow stream were formed into a generally planar shape, juxtaposed in a stacked layered form. Once the multilayer flow stream exited the die, it was cooled and shaped. As used herein, the terms "coextruded" or "coextrusion" refer to the process of continuously and simultaneously extruding two or more materials through a single die with one or more orifices arranged so that the extrudates merge and weld together into a consolidated structure before chilling, *i.e.,* quenching. As used herein, the term extruder refers to any apparatus capable of heating a material to its softening and/or melting temperature to produce an output flow stream of softened and/or melted material which is expelled by gravity or mechanical force from an exit orifice of the apparatus. Suitable extruders may include, but are not limited to single-screw extruders such as smooth barrel and grooved or pin barrel single-screw extruders, twin-screw extruders such as corotating and counter-rotating twin-screw extruders and multiple-screw extruders including rotating center shaft and static center shaft multiple-screw extruders.

In some embodiments, the coextruded films having alternating individual layers of glass and plastic were manufactured by a method that mechanically manipulated the plastic and glass flow streams to multiply the total number of layers of each material during the extrusion process to produce a stacked planar configuration of alternating individual layers of glass and plastic. The use of feed-blocks was used to combine multiple flow streams of plastic and glass into a combined multilayered flow stream. Such feed-blocks are described, for example, in U.S. Patent Nos. 3,759,647; 4,426,344 and U.S. Patent Application Publication No. 2013/0276895. In general, these feed-blocks were configured to receive multiple streams that stacked the flow streams onto each other to form a stacked combined multilayered structure before entering an extrusion die head or other processing equipment.

### BRIEF DESCRIPTION OF THE DRAWINGS

As used herein, the terms "comprises", "comprising" and grammatical variations thereof are to be taken to specify the presence of stated features, integers, steps or components or groups thereof, but do not preclude the presence or addition of one or more other features, integers, steps, components or groups thereof.

Further features and advantages of the present invention will become apparent from the following detailed description, taken in combination with the appended drawings, in which:
FIG. 1 is a drawing illustrating the viscosity-shear rate curves of a tin fluorophosphate glass, "SnF Glass" and a glycol-modified polyethylene terephthalate copolymer, SKYGREEN® PETG SK2008.
FIG. 2 is a conceptual drawing illustrating general embodiments of the multilayered packaging films comprising a coextruded film having alternating individual layers of glass and plastic.

### DETAILED DESCRIPTION OF THE INVENTION

The multilayered packaging films now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

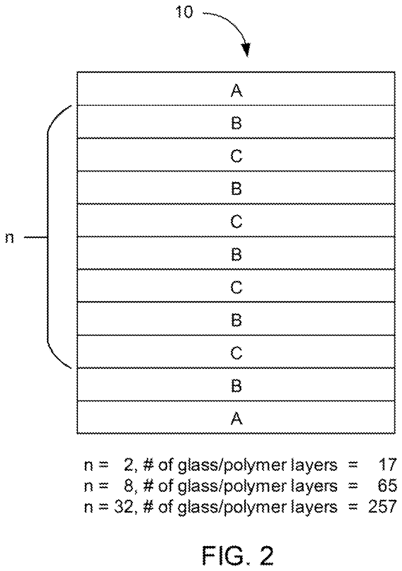

FIG. 2 is a conceptual drawing illustrating general embodiments of multilayer packaging film **10** comprising a coextruded film having alternating individual layers of glass and plastic. In this drawing, layers designated as "A" represent a heat sealing material, layers designated as "B" represent a polymer, and layers designated as "C" represent a glass. Reference "n" represents a multiplier of an eight-layer set of alternating individual layers of glass and plastic. This drawing represents different examples that were fabricated with the total number of alternating individual layers of glass and plastic of the coextruded film varying between 17, 65 and 257 when n = 2, 8 and 32, respectively.

### EXAMPLES

Examples 1-10 of multilayer packaging films were prepared having structures illustrated in FIG. 2. A batch material of tin fluorophosphate glass was prepared having a molar composition of 20% SnO + 50% SnF₂ + 30% NH₄H₂PO₄ by melting in the carbon crucible at 500 °C in air in an electric furnace for 15 minutes, casting the molten composition onto aluminum and cooling to room temperature. The cooled sintered glass composition was ground to a particle size of approximately 3 mm. This glass composition is denoted by reference "Layer C" and had, on an elemental basis, tin in a mole percentage within a range from 15.4 to 17.1, fluorine in a mole percentage within a range from 19.6 to 24.3, phosphorus in a mole percentage within a range from 14.2 to 16.6, and oxygen in a mole percentage within a range from 43.3 to 56. A first plastic resin denoted as "Layer B" was introduced into a first extruder and heated to a temperature sufficient to plasticize the resin to produce a first plastic flow stream. Generally this temperature was above a melting point of the crystalline or semicrystalline plastic resin, and/or at or above the glass transition temperature for an amorphous plastic resin. Next, the glass composition described above as "Layer C" was introduced into a second extruder and heated to above its glass transition temperature to produce a glass flow stream. The first plastic and glass flow streams were sent through a feed-block manifold to produce a vertically stacked flow stream of alternating layers of plastic and glass having a three-layer sequence of plastic/glass/plastic or "Layer B/Layer C/Layer B". The feed-block manifold was manipulated to multiply this three-layer sequence to produce multiple three-layered vertically stacked flow streams. For example, doubling of a three-layer sequence can produce a five-layer flow stream having the sequence of plastic/glass/plastic/glass/plastic or "Layer B/Layer C/Layer B/Layer C/Layer B" while a doubling of the five-layer sequence can produce a nine-layer sequence of plastic/glass/plastic/glass/plastic/glass/plastic/glass/plastic or "Layer B/Layer C/Layer B/Layer C/Layer B/Layer C/Layer B/Layer C/Layer B". While the feed-block manifold multiplied the three-layer plastic/glass/plastic flow stream, a second plastic resin denoted as "Layer A" was introduced into a third extruder. This second plastic resin was heated to a temperature sufficient to plasticize the resin to produce a second plastic flow stream which entered the feed-block manifold. The flow streams of the multiplied three-layered sequence of plastic and glass (Layer B/Layer C/Layer B), and that for Layer A then exited simultaneously through an extrusion slot die head to produce the embodiments depicted in FIG. 2. The construction of some embodiments of the packaging films are reported below in TABLE 1. The oxygen and moisture permeability for some of these packaging films were measured and also reported below in TABLE 1.

| TABLE 1 | | | | | | | | |
|---|---|---|---|---|---|---|---|---|
| Ex. | Layer "A" | Layer "B" | Layer "C" | n | Total # of Glass/ Plastic | Total Thickness Film (micron) | Oxygen Transmission Rate (cm³/m²/24h) | Moisture Vapor Transmission Rate (grams/m²/24h) |
| 1 | A | B1 | C | 2 | 17 | 50 | 0.90 | 0.32 |
| 2 | A | B1 | C | 2 | 17 | 25 | - | --- |
| 3 | A | B1 | C | 8 | 65 | 50 | 0.12 | 0.70 |
| 4 | A | B1 | C | 8 | 65 | 25 | 0.05 | 0.22 |
| 5 | A | B1 | C | 32 | 257 | 50 | - | |
| 6 | A | B2 | C | 2 | 17 | 25 | - | - |
| 7 | A | B2 | C | 8 | 65 | 50 | 0.15 | 0.09 |
| 8 | A | B2 | C | 8 | 65 | 25 | - | - |
| 9 | A | B3 | C | 32 | 257 | 50 | - | --- |
| 10 | A | B4 | C | 32 | 257 | 50 | - | - |

A = a low density polyethylene, DOW LDPE 640I (The Dow Chemical Company, Midland MI) having a density of 0.922 g/cm³, and a melt flow rate of 2.0 g/10 min.
B1 = a glycol-modified polyethylene terephthalate copolymer, SKYGREEN® PETG SK2008 (SK Chemicals, Pangyo, Korea) having a glass transition temperature of 80 °C.
B2 = a polyamide, nylon 6, BASF Ultramid® B36 (BASF Corporation, Wyandotte, MI) having a density of 1.13 g/cm³ and a melting temperature of 220 °C.
B3 = a thermoplastic polyurethane, Elastollan® WY1158 (BASF Corporation, Wyandotte, MI).
B4 = an ethylene acrylic acid copolymer, PRIMACOR™ 1430 (The Dow Chemical Company, Midland MI) having a density of 0.930 g/cm³, and a melt flow rate of 5.0 g/10 min (190 °C/2.16 kg).

## Claims

1. A multilayer packaging film comprising:
a coextruded film comprising alternating layers of glass and plastic,
wherein the number of glass layers is at least two and the number of plastic layers is at least one,
wherein the multilayer packaging film has a total thickness within a range from 10 µm to 250 µm,
wherein the multilayer packaging film has a minimum bend radius of less than 10 mm, and
wherein the glass comprises on an elemental basis tin in a mole percentage within a range from 12.0 to 17.1, fluorine in a mole percentage within a range from 11.2 to 24.3, phosphorus in a mole percentage within a range from 12.1 to 19.6, and oxygen in a mole percentage within a range from 43.3 to 61.1.

2. A multilayer packaging film of the preceding claim, wherein the multilayer packaging film has a water vapor transmission rate within a range from 0 to 1 g/m²/24 hour at 38 °C and 90% relative humidity.

3. A multilayer packaging film of one of the preceding claims, wherein the multilayer packaging film has an oxygen transmission rate within a range from 0 to 1 cm³/m²/24 hour at 23 °C and 0% relative humidity.

4. A multilayer packaging film of one of the preceding claims, wherein the plastic comprises aliphatic and aromatic polyamides, polyethers, polyimides, aliphatic and aromatic polyesters, cyclic olefin copolymers, polyolefin homopolymers and copolymers, high density polyethylenes, anhydride-modified polyethylenes, ethylene vinyl acetate copolymers, polypropylenes, polyamideimides, polycarbonates, polyetheretherketones, polyetherimides, polyethersulphones, polymethyl methacrylates, polyoxymethylenes, polyphenylene sulphides, polystyrenes, unplasticized polyvinyl chlorides, and blends thereof.

5. A multilayer packaging film of one of the preceding claims, wherein the glass has a glass transition temperature, T_{g} of less than 200 °C.

6. A multilayer packaging film of one of the preceding claims, wherein the glass has a glass transition temperature, T_{g} of less than 150 °C.

7. A multilayer packaging film of one of the preceding claims, wherein the glass comprises on an elemental basis tin in a mole percentage within a range from 15.4 to 17.1, fluorine in a mole percentage within a range from 19.6 to 24.3, phosphorus in a mole percentage within a range from 14.2 to 16,6, and oxygen in a mole percentage within a range from 43.3 to 56.

8. A multilayer packaging film of one of the preceding claims, wherein the number of glass layers is at least ten and the number of plastic layers is at least ten.

9. A multilayer packaging film of one of the preceding claims, further comprising a heat sealant layer.

10. A multilayer packaging film of one of the preceding claims, further comprising an abuse layer.

## Patentansprüche

1. Mehrschichtige Verpackungsfolie, umfassend:
eine coextrudierte Folie, die alternierende Schichten aus Glas und Kunststoff umfasst,
wobei die Zahl der Glasschichten mindestens zwei beträgt und die Zahl der Kunststoffschichten mindestens eins beträgt,
wobei die mehrschichtige Verpackungsfolie eine Gesamtdicke im Bereich von 10 µm bis 250 µm aufweist,
wobei die mehrschichtige Verpackungsfolie einen minimalen Biegeradius von weniger als 10 mm aufweist und
wobei das Glas auf Elementbasis Zinn in einem Molprozentanteil in einem Bereich von 12,0 bis 17,1, Fluor in einem Molprozentanteil in einem Bereich von 11,2 bis 24,3, Phosphor in einem Molprozentanteil in einem Bereich von 12,1 bis 19,6 und Sauerstoff in einem Molprozentanteil in einem Bereich von 43,3 bis 61,1 umfasst.

2. Mehrschichtige Verpackungsfolie nach dem vorhergehenden Anspruch, wobei die mehrschichtige Verpackungsfolie eine Wasserdampfdurchlässigkeit in einem Bereich von 0 bis 1 g/m²/24 Stunden bei 38 °C und 90 % relativer Feuchte aufweist.

3. Mehrschichtige Verpackungsfolie nach dem vorhergehenden Anspruch, wobei die mehrschichtige Verpackungsfolie eine Sauerstoffdurchlässigkeit in einem Bereich von 0 bis 1 cm³/m²/24 Stunden bei 23 °C und 0 % relativer Feuchte aufweist.

4. Mehrschichtige Verpackungsfolie nach einem der vorhergehenden Ansprüche, wobei der Kunststoff aliphatische und aromatische Polyamide, Polyether, Polyimide, aliphatische und aromatische Polyester, Cycloolefin-Copolymere, Polyolefin-Homopolymere und -Copolymere, Polyethylene hoher Dichte, anhydridmodifizierte Polyethylene, EthylenVinylacetat-Copolymere, Polypropylene, Polyamidimide, Polycarbonate, Polyetheretherketone, Polyetherimide, Polyethersulfone, Polymethylmethacrylate, Polyoxymethylene, Polyphenylensulfide, Polystyrole, nicht weichgemachte Polyvinylchloride und Mischungen davon umfasst.

5. Mehrschichtige Verpackungsfolie nach einem der vorhergehenden Ansprüche, wobei das Glas eine Glasübergangstemperatur T_{g} von weniger als 200 °C aufweist.

6. Mehrschichtige Verpackungsfolie nach einem der vorhergehenden Ansprüche, wobei das Glas eine Glasübergangstemperatur T_{g} von weniger als 150 °C aufweist.

7. Mehrschichtige Verpackungsfolie nach einem der vorhergehenden Ansprüche, wobei das Glas auf Elementbasis Zinn in einem Molprozentanteil in einem Bereich von 15,4 bis 17,1, Fluor in einem Molprozentanteil in einem Bereich von 19,6 bis 24,3, Phosphor in einem Molprozentanteil in einem Bereich von 14,2 bis 16,6 und Sauerstoff in einem Molprozentanteil in einem Bereich von 43,3 bis 56 umfasst.

8. Mehrschichtige Verpackungsfolie nach einem der vorhergehenden Ansprüche, wobei die Zahl der Glasschichten mindestens zehn beträgt und die Zahl der Kunststoffschichten mindestens zehn beträgt.

9. Mehrschichtige Verpackungsfolie nach einem der vorhergehenden Ansprüche, ferner umfassend eine Heißversiegelungsschicht.

10. Mehrschichtige Verpackungsfolie nach einem der vorhergehenden Ansprüche, ferner umfassend eine Schutzschicht gegen unsachgemäße Behandlung.

## Revendications

1. Film d'emballage multicouche comprenant :
un film coextrudé comprenant des couches alternées de verre et de plastique,
le nombre de couches de verre étant d'au moins deux et le nombre de couches de plastique étant d'au moins une,
le film d'emballage multicouche possédant une épaisseur totale dans une plage de 10 µm à 250 pm,
le film d'emballage multicouche possédant un rayon de courbure minimal inférieur à 10 mm, et
le verre comprenant, sur une base élémentaire, de l'étain en un pourcentage en moles dans une plage de 12,0 à 17,1, du fluor en un pourcentage en moles dans une plage de 11,2 à 24,3, du phosphore en un pourcentage en moles dans une plage de 12,1 à 19,6, et de l'oxygène en un pourcentage en moles dans une plage de 43,3 à 61,1.

2. Film d'emballage multicouche selon la revendication précédente, le film d'emballage multicouche possédant une vitesse de transmission de vapeur d'eau dans une plage de 0 à 1 g/m²/24 heures à 38 °C et 90 % d'humidité relative.

3. Film d'emballage multicouche selon l'une des revendications précédentes, le film d'emballage multicouche possédant une vitesse de transmission d'oxygène dans une plage de 0 à 1 cm³/m²/24 heures à 23 °C et 0 % d'humidité relative.

4. Film d'emballage multicouche selon l'une des revendications précédentes, le plastique comprenant des polyamides aliphatiques et aromatiques, des polyéthers, des polyimides, des polyesters aliphatiques et aromatiques, des copolymères d'oléfine cyclique, des homopolymères et copolymères de polyoléfine, des polyéthylènes haute densité, des polyéthylènes modifiés par un anhydride, des copolymères d'éthylène-acétate de vinyle, des polypropylènes, des polyamidimides, des polycarbonates, des polyétheréthercétones, des polyétherimides, des polyéthersulfones, des poly(méthacrylate de méthyle), des polyoxyméthylènes, des poly(sulfure de phénylène), des polystyrènes, des poly(chlorure de vinyle) non plastifiés, et des mélanges correspondants.

5. Film d'emballage multicouche selon l'une des revendications précédentes, le verre possédant une température de transition vitreuse, T_{g} inférieure à 200 °C.

6. Film d'emballage multicouche selon l'une des revendications précédentes, le verre possédant une température de transition vitreuse, T_{g} inférieure à 150 °C.

7. Film d'emballage multicouche selon l'une des revendications précédentes, le verre comprenant, sur une base élémentaire, de l'étain en un pourcentage en moles dans une plage de 15,4 à 17,1, du fluor en un pourcentage en moles dans une plage de 19,6 à 24,3, du phosphore en un pourcentage en moles dans une plage de 14,2 à 16,6, et de l'oxygène en un pourcentage en moles dans une plage de 43,3 à 56.

8. Film d'emballage multicouche selon l'une des revendications précédentes, le nombre de couches de verre étant d'au moins dix et le nombres de couches de plastique étant d'au moins dix.

9. Film d'emballage multicouche selon l'une des revendications précédentes, comprenant en outre une couche de thermosoudage.

10. Film d'emballage multicouche selon l'une des revendications précédentes, comprenant en outre une couche résistante.
